(19) Europäisches Patentamt

European Patent Office

Office européen des brevets

(11) **EP 1 441 510 A2**

(12) **EUROPEAN PATENT APPLICATION**

(43) Date of publication:
28.07.2004 Bulletin 2004/31

(51) Int Cl.⁷: **H04N 5/44**

(21) Application number: 03014849.8

(22) Date of filing: 30.06.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 30.12.2002 KR 2002087148

(71) Applicant: SAMSUNG ELECTRONICS CO., LTD.
Suwon-City, Kyungki-do (KR)

(72) Inventors:
• **Song, Byung-cheol,
405-1104 Cheongmyung Maeul
Paldal-gu, Suwon-si, Gyeonggi-do (KR)**
• **Chun, Knag-wook
106-502 Shinyoungtong Hyundai Apt.
Hwaseong-gun, Gyeonggi-do (KR)**

(74) Representative: **Grünecker, Kinkeldey,
Stockmair & Schwanhäusser Anwaltssozietät
Maximilianstrasse 58
80538 München (DE)**

(54) **Method and apparatus for de-interlacing video signal**

(57) A three-dimensional de-interlacing method and apparatus for converting an interlaced scan format into a progressive scan format are provided. The three-dimensional de-interlacing method includes, performing low pass filtering on respective predetermined pixels of a current frame and previous frame; comparing a threshold value to a difference value of the respective filtered pixels and determining motion index values of a pixel in a current field and the respective temporally and spatially adjacent pixels of the pixel to be subjected to the de-interlacing; determining a motion mode on the basis of the determined motion index values; and selectively performing spatial interpolation or temporal interpolation depending on the determined motion mode.

FIG. 1

EP 1 441 510 A2

**Description**

The present invention relates to an image format conversion system, and more particularly to a three-dimensional de-interlacing method and apparatus for converting an interlaced scan format into a progressive scan format.

Generally, in the MPEG-2 standard, there are two scan formats: an interlaced scan format and a progressive scan format. In encoder (not shown) and decoder, situations can arise where it is necessary to convert an interlaced scan format video signal into a progressive scan format video signal. Such a scan format conversion is referred to as de-interlacing or Interlaced-to-Progressive Conversion (IPC).

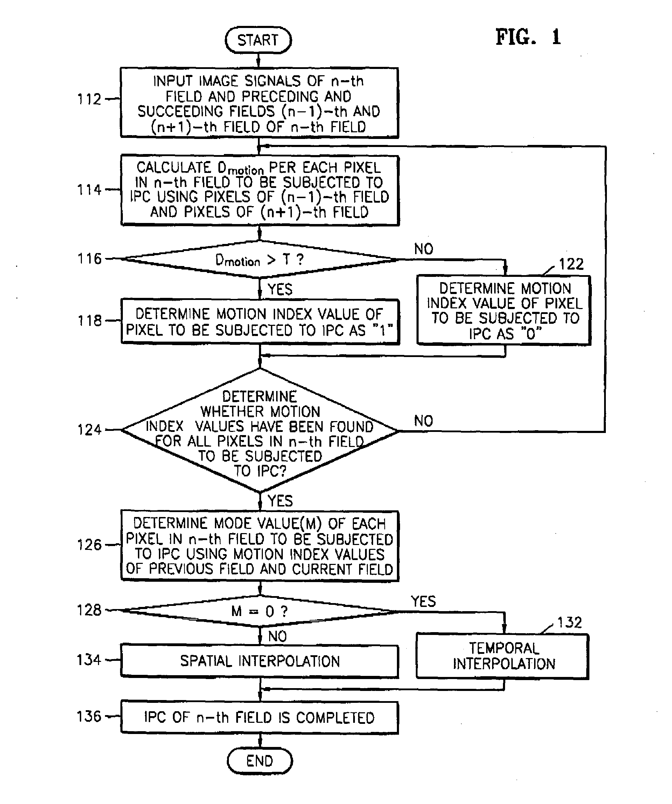

FIG. 1 is a flow chart illustrating a conventional three-dimensional de-interlacing method.

All operations for de-interlacing are generally performed on each pixel unit.

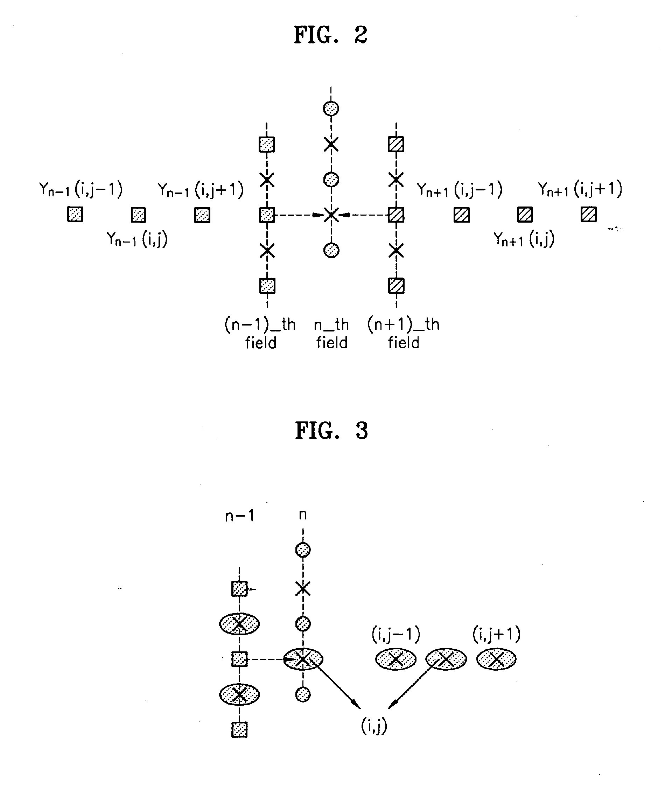

For example, it is assumed that IPC is performed at a position (i, j) of an n-th field, as shown in FIG. 2. In this case, a pixel at the position (i, j) of the n-th field is referred to as $Y_n(i, j)$.

Firstly, image signals corresponding to the n-th field to be subjected to IPC and preceding and succeeding fields ((n-1)-th and (n+1)-th fields) of the n-th field are input in step 112. Subsequently, as shown in FIG. 2, a difference value $D_{motion}$ between the pixel of the (n-1)-th field and the pixel of the (n+1)-th field is calculated in step 114. For example, the difference value $D_{motion}$ between the pixels can be determined from pixels $Y_{n-1}(i, j)$ and $Y_{n+1}(i, j)$ located at the preceding and succeeding positions of $Y_n(i, j)$ and the pixels $Y_{n-1}(i, j\pm1)$ and $Y_{n+1}(i, j\pm1)$ located at the horizontally left and right positions of the pixels $Y_{n-1}(i, j)$ and $Y_{n+1}(i, j)$, using the following Equation 1.

$$D_{motion} = \frac{1}{3}\sum_{k=-1}^{1}\left|Y_{n-1}(i, j+k) - Y_{n+1}(i, j+k)\right| \qquad \ldots\ (1)$$

Subsequently, the difference value $D_{motion}$ is compared with a predetermined threshold value T in step 116. If the difference value $D_{motion}$ is greater than the predetermined threshold value T, it is considered that the pixel $Y_{n-1}(i, j)$ has moved and accordingly a motion index value $M_n(i, j)$ is determined as "1" in step 118. On the other hand, if the difference value $D_{motion}$ is smaller than the threshold value T, it is considered that the pixel $Y_n(i, j)$ has not moved and accordingly the motion index value $M_n(i, j)$ is determined as "0" in step 122.

In step 124, it is determined whether the motion pixel values have been found for all the pixels in the n-th field to be subjected to IPC.

Subsequently, after the motion index values for all the pixels in the n-th field to be subjected to IPC are determined, a mode value M is finally determined using a motion index value of a pixel in the n-th field, motion index values of the pixels at the horizontally left and right positions of the pixel, and two nearest motion index values to that of the pixel among motion index values of all pixels in the preceding field, in step 126. That is, as shown in FIG. 3, the mode value M of $Y_n(i, j)$ is calculated using Equation 2 below.

$$M = \sum_{k=-1,+1} M_{n-1}(i+k, j) + \sum_{k=-1,0,+1} M_n(i, j+k) \qquad \ldots\ (2)$$

In step 128, if the mode value M of $Y_n(i, j)$ is "0", it is determined that $Y_n(i, j)$ is in a stop mode. On the other hand, if the mode value M of $Y_{n-1}(i, j)$ is not "0", it is determined that $Y_{n-1}(i, j)$ is in a motion mode.

Subsequently, if it is determined that $Y_{n-1}(i, j)$ is in the stop mode, a pixel value to which a temporal interpolation method using an average of two temporally adjacent pixels is applied, is output in step 132. On the other hand, if determined as the motion mode, a pixel value to which a spatial interpolation method using an edge direction value is applied, is output in step 134.

Subsequently, after IPC is performed on all pixels of the n-th field to be subject to IPC in step 136, the same process is performed on the next field.

In the case of the prior art as in FIG. 1, only the motion information of three pixels including a current pixel and two pixels at the horizontally left and right positions of the current pixel is used to determine the motion index value. Therefore, sufficient motion information is not reflected. As a result, there is a problem in that the prior art has a problem in that it cannot provide a robust threshold value T to images having a few motions as well as images having many motions.

Therefore, the object of the present invention to provide a de-interlacing method and apparatus which can strongly determine a motion mode even in areas having no motion as well as in areas having motions by performing IPC using motion index values determined from two-dimensional low pass filtered pixel values.

According to an aspect of the present invention, this object is met by the features of claims 1 and 8.

The above and other features and advantages of the present invention will become more apparent by describing in detail exemplary embodiments thereof with reference to the attached drawings in which:

FIG. 1 is a flow chart illustrating a conventional three-dimensional de-interlacing method;

FIG. 2 is a conventional conceptual scheme for determining a motion index value;

FIG. 3 is a conventional conceptual scheme for determining a motion mode value;

FIG. 4 is a block diagram showing a three-dimensional de-interlacing apparatus of the present invention;

FIG. 5 is a detailed view of a motion index value determination unit shown in FIG. 4;

FIG. 6 is a flow chart illustrating a three-dimensional de-interlacing method according to the present invention;

FIG. 7 shows the motion index values used for determining the motion mode value according to the present invention; and

FIG. 8 shows YUV sample points of a vertical direction in a 4:2:0 format.

Hereinafter, preferred embodiments of the present invention will be described in detail with reference to appended drawings.

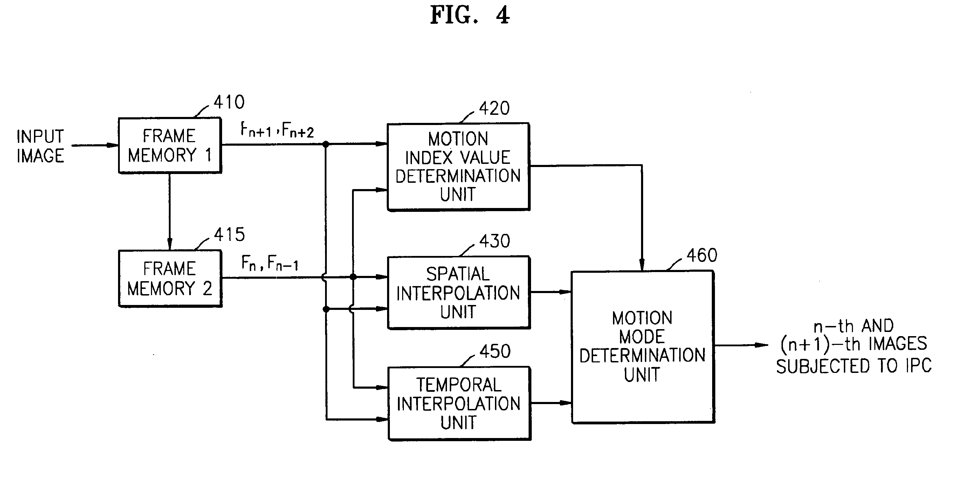

FIG. 4 is a block diagram showing a three-dimensional de-interlacing apparatus of the present invention.

With reference to FIG. 4, first and second frame memories 410 and 415 store an input image signal in units of a frame. That is, the first frame memory 410 stores a (n+1)-th field $F_{n+1}$ and (n+2)-th field $F_{n+2}$ of a current frame and the second frame memory 415 stores a (n-1)-th field $F_{n-1}$ and n-th field $F_n$ of a previous frame. Accordingly, IPC is performed on the n-th field and (n+1)-th field using the image signals stored in the first frame memory 410 and second frame memory 415.

A motion index value determination unit 420 performs two-dimensional low pass filtering on a pixel pm1 of a current frame and a pixel pm2 of the frame delayed by one frame from the current frame, obtains a difference value $D_{motion}$ of the filtered pixels cm1 and cm2, and compares the difference value $D_{motion}$ with a threshold value T to thereby determine motion index values of a current line in a field.

A spatial interpolation unit 430 performs spatial interpolation of the pixels based on edge direction values detected at respective pixel positions in the n-th field $F_n$ and the (n+1)-th field $F_{n+1}$.

A temporal interpolation unit 450 obtains an average value with respect to each pixel of the current frame and the corresponding pixel of the previous frame.

A motion mode determination unit 460 determines a motion mode on each pixel using all the motion index values of the current pixel and peripheral pixels detected from the motion index value determination unit 420, and selects one between the output of the spatial interpolation unit 430 and the output of the temporal interpolation unit 450 on the basis of the motion mode. As a result, the motion mode determination unit 460 outputs the image signals of the n-th field $F_n$ and (n+1)-th field $F_{n+1}$ subjected to IPC.

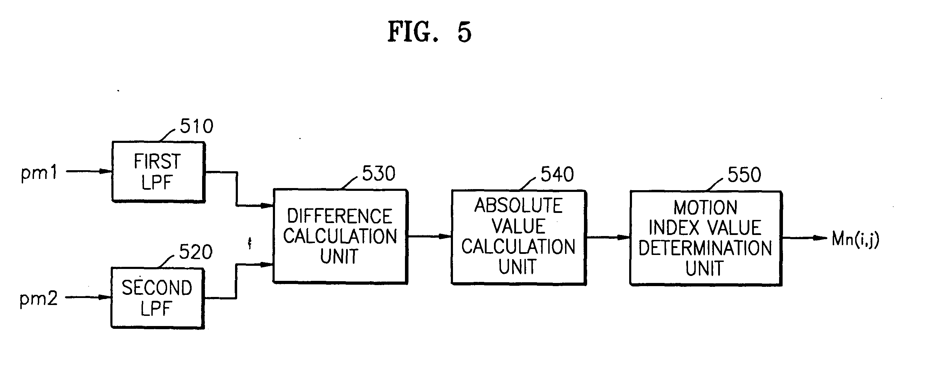

FIG. 5 is a detailed view of the motion index value determination unit shown in FIG. 4.

With reference to FIG. 5, a first low-pass filter 510 performs two-dimensional low pass filtering on each pixel pm1 of the current frames $F_{n+1}$ and $F_{n+2}$. A second low-pass filter 520 performs two-dimensional low pass filtering on the pixel pm2 of the previous frames $F_{n-1}$ and $F_n$ at the spatially same position as each pixel pm1. The first and second low pass filters 510 and 520 output weighted averaging pixel values for respective pixels within predetermined areas.

A difference calculation unit 530 obtains a difference value between the pixel value cm1 output from the first low pass filter 510 and the pixel value cm2 output from the second low pass filter 520.

An absolute value calculation unit 540 obtains the absolute value of the difference value from the difference calculation unit 530.

A motion index value determination unit 550 compares a difference value obtained from the absolute value calculation unit 540 with a threshold value to determine the motion index values of the respective pixels. That is, the motion index value determination unit 550 determines that a motion exists if the difference value is equal to and greater than the threshold value, and accordingly determines that a motion index value of the corresponding pixel is "1". On the other hand, the motion index value determination unit 550 determines that no motion exists if the difference value is smaller than the threshold value, and accordingly determines that the motion index value of the corresponding pixel is "0".

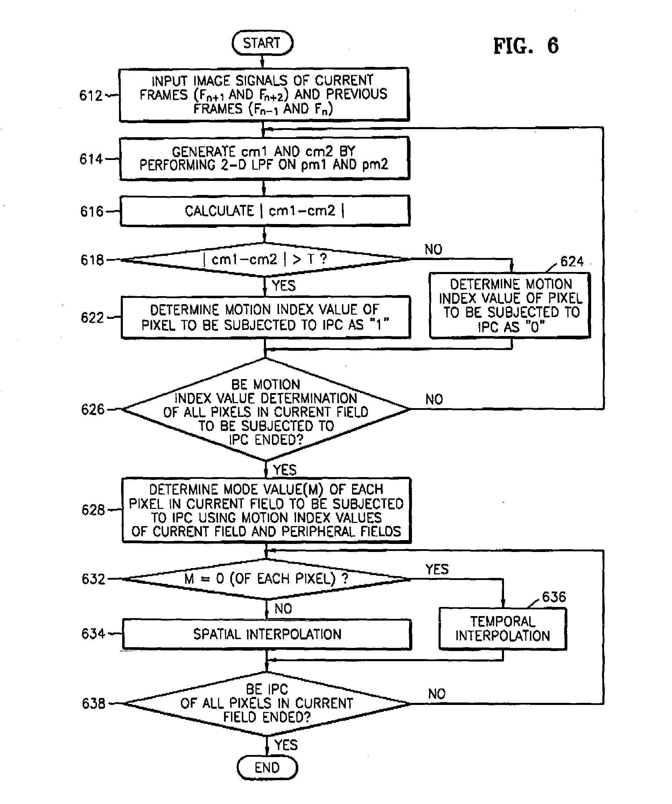

FIG. 6 is a flow chart illustrating a three-dimensional de-interlacing method according to the present invention.

All operations for de-interlacing are performed on the basis of a luminance component of each pixel. $F_n(i, j)$ is defined as a pixel at a position $(i, j)$ of an n-th field.

Firstly, image signals of current frames $F_{n+1}$ and $F_{n+2}$ and previous frames $F_{n-1}$ and $F_n$ are input in step 612. At this time, see an example of performing IPC of the n-th field $F_n$. For example, a pixel $F_{n+1}(i, j)$ of two pixels at the temporally front and back positions of the pixel $F_n(i, j)$ to be subjected to IPC is assumed to be a first output pixel pm1 and a pixel $F_{n-1}(i, j)$ of the frame delayed by one frame is assumed to be a second output pixel pm2.

Subsequently, the first output pixel pm1 and second output pixel pm2 are used to generate the first filter output value cm1 and the second filter output value cm2, respectively, by the two-dimensional low pass filtering in step 614. For example, the two-dimensional low pass filtering may be achieved by weighted averaging, that is, a method of obtaining an average by multiplying the pixels within a predetermined window area extended horizontally and vertically centering on the current pixel by a predetermined filter coefficient. Such low pass filtering is performed on the first output pixel pm1 and second output pixel pm2. Here, the first filter output value cm1 is calculated using Equation 3 below.

$$cm1 = \sum_{l=-1,0,1} \omega_{0,l} F_{n+1}(i, j+l) + \sum_{k=-1,1} \sum_{l=-1,0,1} \omega_{k,l} F_{n+2}(i+k, j+l) \quad .... (3)$$

Herein, the second filter output value cm2 is calculated using Equation 4 below.

$$cm2 = \sum_{l=-1,0,1} \omega_{0,l} F_{n-1}(i, j+l) + \sum_{k=-1,1} \sum_{l=-1,0,1} \omega_{k,l} F_n(i+k, j+l) \quad .... (4)$$

In Equations 3 and 4 above, $\omega_{k,l}$ is the filter coefficient within the predetermined area for the two-dimensional low pass filtering, for example, within a 3x3 area.

Subsequently, after obtaining the difference between the first filter output value cm1 and the second filter output value cm2, the absolute value of the difference, which will be referred to as $D_{motion}$ is obtained in step 616.

Then, the difference value $D_{motion}$ is compared with a threshold value T in step 618. If the difference value $D_{motion}$ is equal to and greater than the threshold value T, it is determined that the pixel $F_n(i, j)$ to be subjected to IPC is moved. Accordingly, a motion index value $M(i, j)$ is determined as "1" in step 622. On the other hand, if the difference value $D_{motion}$ is smaller than the threshold value T, it is determined that the pixel $F_n(i, j)$ is not moved. Accordingly the motion index value $M(i, j)$ is determined as "0" in step 624.

In this way, in step 616, the difference values $D_{motion}$ are obtained for all pixels in $F_n$ to be subjected to IPC and compared with the threshold value T to thereby obtain the motion index values. Subsequently, steps 614 through 626 are repeated for all the pixels in $F_{n+1}$ to be subjected to IPC.

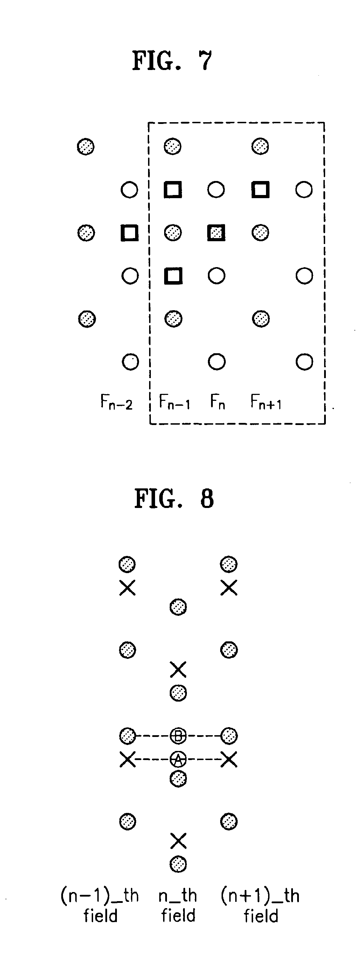

Subsequently, after the motion index values of all pixels in $F_n$ and $F_{n+1}$ to be subjected to IPC are determined, a motion mode value M of each pixel in $F_n(i, j)$ to be subjected to IPC is determined using the motion index values of the field $F_n$ and peripheral fields thereof in step 628. For example, IPC is performed on a bottom field of a first frame and a top field of a second frame in a pixel line sequence of the each field after reading the two adjacent frames. With reference to FIG. 7, dark circles denote the pixels of the top field and white circles denote the pixels of the bottom field. For convenience, the pixels of a vertical component are shown in a time direction. In FIG. 7, the fields to be subjected to IPC are the fields $F_n$ and $F_{n+1}$ and the pixel to be presently subjected to IPC is the pixel at a dark square position $(i, j)$ of the field $F_n$. The motion mode value M of the pixel to be subjected to IPC is determined using the motion index value of the pixel and the motion index values at white square positions. Here, all the motion index values of the past fields $F_{n-2}$ and $F_{n-1}$ are pre-stored in a particular storage. Also, the motion mode values of an upper line of the line to be subjected to IPC are temporally pre-obtained values. Thus, the motion mode value M of $F_n(i, j)$ is represented using all of motion index values $M_n(i, j)$ and $M_n(i, j\pm1)$ of the pixels in $F_n$, motion index values (that is, $M_{n+1}(i-1, j)$ and $M_{n+1}(i-1, j\pm1)$) of the temporally and spatially nearest pixels to $F_n(i, j)$ among the pixels in $F_{n+1}$, motion index values (that is, $M_{n-1}(i\pm1, j)$ and $M_{n-1}(i\pm1, j\pm1)$) of the temporally and spatially nearest pixels to $F_n(i, j)$ among the pixels in $F_{n-1}$, and finally motion index values (that is, $M_{n-2}(i, j)$ and $M_{n-2}(i, j\pm1)$) of the temporally and spatially nearest pixels to $F_n(i, j)$ among the pixels in $F_{n-2}$, as the following Equation 5.

$$M = \sum_{k=-1}^{l}\{M_n(i,j+k)+M_{n+1}(i-1,,j+k)+M_{n-1}(i-1,j+k)+M_{n-1}(i+1,j+k)+M_{n-2}(i,j+k)\}$$

.... (5)

In another embodiment, the motion mode value M can be calculated using some among the 15 motion index values used in Equation 5 or using additional motion index values under some conditions.

If the motion mode value M is "0", it is determined that $F_n(i, j)$ is in a stop mode, and on the other hand if the motion mode value M is not "0", it is determined that $F_n(i, j)$ is in a motion mode, in step 632.

Subsequently, if it is determined that $F_n(i, j)$ is in the stop mode, a pixel value to which a temporal interpolation method using an average value of two adjacent pixels is applied, is output in step 636. On the other hand, if it is determined that $F_n(i, j)$ is in the motion mode, a pixel value to which a spatial interpolation method using edge direction values is applied, is output in step 634.

In this way, by adaptively performing the temporal interpolation method and spatial interpolation method with respect to all pixels in $F_n$ to be subjected to IPC on the basis of the motion mode value M, all luminance components of pixel values to be finally interpolated are output in step 638. Steps 628 through 638 are also applied in the same manner to all the pixels in $F_{n+1}$ to be subjected to IPC. As a result, according to the IPC method of the present invention, it is possible to strongly determine the motion mode even in the areas having no motion as well as in the areas having motions, by using a greater number of motion index values than in the prior art.

According to another embodiment of the present invention, a method of performing a three-dimensional IPC on a UV component in a 4:2:0 YUV image signal is provided. That is, spatial interpolation and temporal interpolation are selectively used by detecting motions of the UV components of pixels as in Y components of pixels. However, because the UV components of pixels has a very small change, the motion mode determination using the motion index values of the pixels may generate an error. According to the present invention, the motion modes of the UV components of pixels are determined using the motion mode values obtained from the Y components of pixels. FIG. 8 shows the locations of the UV components of pixels in a 4:2:0 interlaced image. The parts denoted by circles represent the Y components, and the parts denoted by X represent the UV components.

In FIG. 8, it is assumed that the UV component of the pixel at a position A of an n-th bottom field is de-interlaced. According to the present invention, the motion mode value of a Y component at a position B is used instead of the motion mode value of the UV component at the position A. Because the mode value of the Y component is reliable and the distance between the positions A and B is also very small, the motion mode determination method of the present invention is useful. IPC of the UV components of pixels at other positions is also performed in the same manner. Accordingly, if the motion mode value of the UV component of a pixel to be subjected to IPC is "0", temporal interpolation is performed. On the other hand, if the motion mode value is not "0", an average value of adjacent pixels above and below in a 90° direction is obtained. Because the UV components of pixels have a small motion, a directional interpolation as in the Y components of pixels is difficult. Also, because there are many possibilities that the direction of the Y component and the direction of the UV component are different to each other when trying to use a direction value of the Y component, a simple spatial interpolation having 90° direction is performed on the UV components of pixels.

The present invention may be embodied in a general purpose digital computer by running a program from a computer readable medium, including but not limited to storage media such as magnetic storage media (e.g. ROM's, floppy disks, hard disks, etc.), optically readable media (e.g., CD-ROMs, DVDs, etc.) and carrier waves (e.g., transmissions over the Internet). The present invention may be embodied as a computer readable medium having a computer readable program code unit embodied therein for causing a number of computer system connected via a network to effect distributed processing.

As described above, in accordance with the present invention, it is possible to strongly determine a motion mode even in areas having no motion as well as in areas having motions by performing de-interlacing using motion index values determined from two-dimensional low pass filtered pixel values

## Claims

1. A de-interlacing method of converting an interlaced format into a progressive format comprising:

   performing low pass filtering on respective predetermined pixels ($Y_n(i, j)$) of a current frame ($F_{n+1}$) and previous

frame ($F_{n-1}$);

comparing a threshold value (T) to a difference value of the respective filtered pixels (cm1, cm2), and determining motion index values ($M_n$ (i, j)) of respective pixels in a current field to be subjected to de-interlacing and of respective temporally and spatially adjacent pixels of the respective pixels;

determining a motion mode (M) on the basis of the determined motion index values; and

selectively performing spatial interpolation and temporal interpolation according to the determined motion mode (M).

2. The de-interlacing method of claim 1, wherein the low pass filtering is performed by weighted averaging in which an average is obtained by multiplying a predetermined filter coefficient ($\omega$) by pixels within a window having a predetermined vertical and horizontal size centering on respective pixels within one frame.

3. The de-interlacing method of claim 1, wherein assuming that a field to be currently subjected to Interlaced-to-Progressive Conversion is an n-th field and a current pixel at a position (i, j) within the n-th field is $Y_n(i, j)$, a motion index value ($M_n(i, j)$) of the current pixel ($Y_n(i, j)$) is determined as 1 if the difference value is equal to and greater than the threshold value (T), and the motion index value ($M_n(i, j)$) of the current pixel ($Y_n(i, j)$) is determined as 0 if the difference value is less than the threshold value.

4. The de-interlacing method of claim 1, wherein the motion mode value (M) of $Y_n(i, j)$ is determined by

$$M = \sum_{k=-1}^{l} \{M_n(i, j+k) + M_{n+1}(i-1,, j+k) + M_{n-1}(i-1, j+k) + M_{n-1}(i+1, j+k) + M_{n-2}(i, j+k)\},$$

wherein $M_n(i, j)$ is the motion index value of $Y_n(i, j)$.

5. The de-interlacing method of claim 1, wherein if the sum of the motion index value ($M_n$ (i, j)) of a pixel in the current field and the motion index values of temporally and spatially adjacent pixels of the pixel is "0", $Y_n(i, j)$ is in a stop mode, and if the sum is not "0", $Y_n(i, j)$ is in a motion mode.

6. The de-interlacing method of claim 1, wherein a pixel value to which the temporal interpolation is applied is output if it is determined that the pixel value is in the stop mode and a pixel value to which the spatial interpolation is applied is output if it is determined that the pixel value is in the motion mode.

7. The de-interlacing method of claim 1, further comprising:

replacing the motion mode of a luminance component of pixel by the motion mode of a color difference component of pixel; and

outputting a pixel value of color difference component obtained by interpolating two adjacent pixels on a temporal axis if it is determined that the pixel value is in the stop mode, and outputting a pixel value of color difference component to which the pixels are spatially interpolated in a 90° direction if it is determined that the pixel value is in the motion mode.

8. A de-interlacing apparatus of converting an interlaced format into a progressive format, the de-interlacing apparatus comprising:

a spatial interpolation unit (430) which spatially interpolates along edge directions detected at respective pixel positions in a current frame;

a temporal interpolation unit (450) which averages a pixel of the current frame ($F_{n+1}$) and a pixel of a previous frame ($F_{n-1}$);

a motion index value determination unit (420) which performs two-dimensional low pass filtering on the pixel (pm1) of the current frame and a pixel (pm2) of a frame delayed by one frame from the current frame, obtains a difference value between the filtered pixel (cm1) of the current frame and the filtered pixel (cm2) of the delayed frame, and compares the difference value with a threshold value (T) to determine a motion index value of a pixel in a field; and

a motion mode determination unit (460) which determines a motion mode (M) on the basis of motion index values ($M_n(i,j)$) of a pixel of a current field and adjacent pixels of a past field and future field detected by the motion index value determination unit (420), and selects the spatial interpolation unit and temporal interpolation unit according to the motion mode (M).

9. The de-interlacing apparatus of claim 8, wherein the motion index value determination unit (420) includes:

a first low pass filter (510) which performs the two-dimensional low pass filtering on the pixel on the current frame;

a second low pass filter (520) which performs two-dimensional low pass filtering on the pixel of the frame delayed by one frame from the current frame;

a difference calculation unit (530) which obtains a difference value between a pixel value output from the first (510) low pass filter and a pixel value output from the second low pass filter (520); and

a motion index value determination unit (550) which compares the difference value calculated by the difference calculation unit (530) with the threshold value (T), and determines a motion index value ($M_n(i,j)$) of the pixel.

10. The de-interlacing apparatus of claim 9, wherein the motion index value determination unit (550) determines a motion index value of the pixel as 1 if the difference value is equal to and greater than the threshold value (T), and determines the motion index value of the pixel as 0 if the difference value is smaller than the threshold value (T).

**FIG. 1**

START

112 — INPUT IMAGE SIGNALS OF n-th FIELD AND PRECEDING AND SUCCEEDING FIELDS (n−1)-th AND (n+1)-th FIELD OF n-th FIELD

114 — CALCULATE $D_{motion}$ PER EACH PIXEL IN n-th FIELD TO BE SUBJECTED TO IPC USING PIXELS OF (n−1)-th FIELD AND PIXELS OF (n+1)-th FIELD

116 — $D_{motion} > T$ ? — NO

YES

118 — DETERMINE MOTION INDEX VALUE OF PIXEL TO BE SUBJECTED TO IPC AS "1"

122 — DETERMINE MOTION INDEX VALUE OF PIXEL TO BE SUBJECTED TO IPC AS "0"

124 — DETERMINE WHETHER MOTION INDEX VALUES HAVE BEEN FOUND FOR ALL PIXELS IN n-th FIELD TO BE SUBJECTED TO IPC? — NO

YES

126 — DETERMINE MODE VALUE(M) OF EACH PIXEL IN n-th FIELD TO BE SUBJECTED TO IPC USING MOTION INDEX VALUES OF PREVIOUS FIELD AND CURRENT FIELD

128 — $M = 0$ ? — YES

NO

132 — TEMPORAL INTERPOLATION

134 — SPATIAL INTERPOLATION

136 — IPC OF n-th FIELD IS COMPLETED

END

# FIG. 2

$Y_{n-1}(i,j-1)$  $Y_{n-1}(i,j+1)$  $Y_{n+1}(i,j-1)$  $Y_{n+1}(i,j+1)$

$Y_{n-1}(i,j)$  $Y_{n+1}(i,j)$

(n−1)_th
field

n_th
field

(n+1)_th
field

# FIG. 3

n−1  n

(i,j−1)  (i,j+1)

(i,j)

## FIG. 4

INPUT IMAGE → FRAME MEMORY 1 (410)

FRAME MEMORY 1 → $F_{n+1}, F_{n+2}$

FRAME MEMORY 1 → FRAME MEMORY 2 (415)

FRAME MEMORY 2 → $F_n, F_{n-1}$

MOTION INDEX VALUE DETERMINATION UNIT (420)

SPATIAL INTERPOLATION UNIT (430)

TEMPORAL INTERPOLATION UNIT (450)

MOTION MODE DETERMINATION UNIT (460)

→ n-th AND (n+1)-th IMAGES SUBJECTED TO IPC

EP 1 441 510 A2

FIG. 5

EP 1 441 510 A2

# FIG. 6

```
                    ( START )
                        │
                        ▼
612 ─┤ INPUT IMAGE SIGNALS OF CURRENT
        FRAMES (Fn+1 AND Fn+2) AND PREVIOUS
        FRAMES (Fn-1 AND Fn)
                        │
                        ▼
614 ─┤ GENERATE cm1 AND cm2 BY
        PERFORMING 2-D LPF ON pm1 AND pm2
                        │
                        ▼
616 ─┤ CALCULATE | cm1-cm2 |
                        │
                        ▼
618 ─┤ | cm1-cm2 | > T ? ├──── NO ────┐
                        │              ▼  624
                       YES    DETERMINE MOTION
                        │     INDEX VALUE OF PIXEL
                        ▼     TO BE SUBJECTED TO
622 ─┤ DETERMINE MOTION INDEX VALUE OF    IPC AS "0"
        PIXEL TO BE SUBJECTED TO IPC AS "1"
                        │              │
                        ▼◄─────────────┘
626 ─┤ BE MOTION
        INDEX VALUE DETERMINATION ├──── NO ────┐
        OF ALL PIXELS IN CURRENT FIELD          │
        TO BE SUBJECTED TO                       │
        IPC ENDED?                               │
                        │                        │
                       YES                       │
                        ▼                        │
628 ─┤ DETERMINE MODE VALUE(M) OF EACH           │
        PIXEL IN CURRENT FIELD TO BE SUBJECTED   │
        TO IPC USING MOTION INDEX VALUES         │
        OF CURRENT FIELD AND PERIPHERAL FIELDS   │
                        │                        │
                        ▼                        │
632 ─┤ M = 0 (OF EACH PIXEL) ? ├──── YES ───┐   │
                        │                     ▼ 636
                       NO           TEMPORAL  │
                        ▼           INTERPOLATION
634 ─┤ SPATIAL INTERPOLATION          │      │
                        │             │      │
                        ▼◄────────────┘      │
638 ─┤ BE IPC                                │
        OF ALL PIXELS IN CURRENT ├─ NO ──────┘
        FIELD ENDED?
                        │
                       YES
                        ▼
                    ( END )
```

FIG. 7

$F_{n-2}$  $F_{n-1}$  $F_n$  $F_{n+1}$

FIG. 8

(n−1)_th    n_th    (n+1)_th
field       field   field